# EUROPÄISCHE PATENTSCHRIFT

(11) **EP 4 126 561 B1**
(45) Veröffentlichungstag und Bekanntmachung des Hinweises auf die Patenterteilung: **07.05.2025**
(21) Anmeldenummer: 20820352.1
(22) Anmeldetag: 02.12.2020
(51) Int. Cl.: B60C 1/00, C08L 7/00

(54) **SCHWEFELVERNETZBARE GUMMIERUNGSMISCHUNG**
SULFUR-CROSSLINKABLE RUBBER-COATING MIXTURE
MÉLANGE DE REVÊTEMENT DE CAOUTCHOUC RÉTICULABLE AU SOUFRE

(30) Priorität: 31.03.2020 DE 102020204152
(43) Veröffentlichungstag der Anmeldung: 08.02.2023
(73) Patentinhaber: Continental Reifen Deutschland GmbH, 30175 Hannover (DE)
(72) Erfinder: EICHHORST, Christoph, 30165 Hannover (DE); RAJAN, Vipin, 30165 Hannover (DE); SCHMAUNZ-HIRSCH, Cornelia, 30165 Hannover (DE); KRAMER, Thomas, 30165 Hannover (DE); RECKER, Carla, 30165 Hannover (DE)
(74) Vertreter: Continental Corporation
(86) Internationale Anmeldenummer: PCT/EP2020/084283
(87) Internationale Veröffentlichungsnummer: WO 2021/197653

(56) Entgegenhaltungen:
- EP-A1- 3 620 308
- DE-A1- 102017 211 247
- US-A1- 2004 116 592

## Beschreibung

Die Erfindung betrifft eine schwefelvernetzbare Gummierungsmischung für metallische Festigkeitsträger, die zumindest ein Novolak-Harz, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und zumindest ein verethertes Melaminharz enthält. Ferner betrifft die Erfindung einen Fahrzeugluftreifen, der zumindest eine solche mit Schwefel vernetzte Gummierungsmischung aufweist.

In schwefelvernetzbaren Kautschukmischungen, die als Gummierungsmischungen für textile Festigkeitsträger wie Rayon, Polyamid und Polyester verwendet werden, werden üblicherweise so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Als Alternative zu den RFL-Dips werden heute auch malein-funktionalisierte Polymere zur Behandlung von textilem Gewebe bzw. textilen Festigkeitsträgern angeboten, um eine verbesserte Haftung an Kautschukmischungen zu erzielen. Solche so genannten RF-freien Dips werden z. B. in der EP 1745079 B1 sowie der DE 102014211365 A1 offenbart.

Als Methylendonor/Formaldehydspender werden z. B. Hexamethoxymethylmelamin (HMMM) und/oder Hexamethylentetramin (HMT) eingesetzt. Ihr Einsatz ist in der Reifenindustrie weit verbreitet. Als Methylenakzeptoren kommen Resorcin und Resorcinäquivalente oder deren Vorkondensate sowie andere Phenole zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit der Haftimprägnierung des Festigkeitsträgers in haftende Wechselwirkung tritt.

Der Einsatz von Methylenakzeptor-Methylendonor-Paaren ist auch für Gummierungsmischungen für metallische Festigkeitsträger, insbesondere vermessingten Stahlcord, bekannt. Bei dem sogenannten Direkthaftverfahren für vermessingten Stahlcord enthält die Gummierungsmischung beispielsweise Cobaltsalze und ein Resorcin-Formaldehyd-Kieselsäuresystem, wobei das Formaldehyd in der Regel Formaldehydspendern wie veretherten Melaminharzen entstammt. Zu den veretherten Melaminharzen zählen beispielsweise Hexamethoxymethylmelamin (HMMM) und Hexamethylentetramin (HMT). Zur Verbesserung der Haftung verwendet man auch Verstärkerharze und die Mischungen sollten viel Schwefel und weniger Beschleuniger enthalten, damit eine ausreichende mechanische Verzahnung mit der Stahlcordoberfläche erfolgen kann.

Resorcinbasierte Methylenakzeptoren weisen im Hinblick auf die Arbeitssicherheit und den Umweltschutz Nachteile auf. Resorcin hat einen relativ hohen Dampfdruck bei den Verarbeitungstemperaturen einer Gummierungsmischung, so dass es z. T. bei der Verarbeitung verdampft und sich an kühleren Bauteilen niederschlägt. Dies führt zu großen Verunreinigungen und somit hohem Reinigungsaufwand der Verarbeitungsumgebung. Ferner ist Resorcin als gesundheitsschädlich und umweltgefährlich eingestuft. Es wirkt möglicherweise auf das zentrale Nervensystem. Man ist daher bestrebt, auf Resorcin als Methylenakzeptor zu verzichten.

Mischungen, die auf Methylenakzeptoren verzichten, sind z. B. aus der EP 0 830 423 B1 und der EP 2 065 219 A1 bekannt. In diesen Schriften werden aber so genannte selbstkondensierende alkylierte Triazinharze mit hoher Imino- und/oder Methylolfunktionalität eingesetzt, wobei angenommen wird, dass die hohe Imino- und/oder Methylolfunktionalität es diesen Harzen erlaubt, selbst zu kondensieren und dabei ein für die Haftung nötiges Netzwerk zu bilden, ohne dass es eines Methylenakzeptors bedarf.

Aus der EP 2 674 452 A1 ist es bekannt, als Methylenakzeptor in einer schwefelvernetzbaren Gummierungsmischung für textile Festigkeitsträger in Fahrzeugluftreifen ein reaktives Phenolharz, insbesondere ein mit einem pflanzlichen und/oder tierischen Öl, einem ungesättigten Öl und/oder aromatischen Kohlenwasserstoff modifiziertes Phenolharz, einzusetzen. Dies führt bei guter Haftung zu weniger Verunreinigungen bei der Mischungsherstellung und gleichzeitig könnte auf gesundheitsschädliches und umweltgefährdendes Resorcin bei der Verarbeitung verzichtet werden.

Es hat sich gezeigt, dass die vorgenannten Methylenakzeptoren nicht für alle Anwendungsfälle, insbesondere alle Reifenbodymischungen, zu der gewünschten Haftung und Steifigkeit führen. Häufig sind auch noch Resorcinreste in den Harzen vorhanden, die die bekannten Gesundheits- und Umweltgefahren bei der Verarbeitung nach sich ziehen.

Aus der EP 2 432 810 B1 sind haftungsverbessernde Gummierungsmischungen für Gummiartikel bekannt, die zumindest ein Novolak-Harz, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und zumindest ein verethertes Melaminharz enthalten. Die Mischungen sollen sich durch gute Härte, Zugfestigkeit und Haftung auszeichnen, wobei auf gesundheits- und umweltgefährdende Systeme auf der Basis von Resorcin verzichtet wird. Die in der EP 2 432 810 B1 beschriebenen Mischungen weisen 3 phr eines butylcarbamatfunktionalisierten Phenol-Formaldehyd-Harzes und 3 phr Hexamethoxymethylmelamin (HMMM) auf.

Der Erfindung liegt die Aufgabe zu Grunde, eine schwefelvernetzbare Gummierungsmischung bereitzustellen, die eine verbesserte Haftung zu metallischen Festigkeitsträgern aufweist und damit zu einer Verbesserung im Hinblick auf die Haltbarkeit der gummierten Festigkeitsträgerlagen führt.

Gelöst wird die Aufgabe erfindungsgemäß dadurch, dass die Gummierungsmischung zumindest ein organisches Cobaltsalz enthält.

Überraschenderweise hat sich gezeigt, dass durch die Zugabe von Cobaltsalzen die Haftung zwischen metallischen Festigkeitsträgern und Gummierungsmischung deutlich verbessert werden kann.

Gemäß einer vorteilhaften Weiterbildung der Erfindung enthält die Gummierungsmischung
- weniger als 2,5 phr (Gewichtsteile, bezogen auf 100 Gewichtsteile der gesamten Kautschuke in der Mischung), vorzugsweise 1,2 bis 1,8 phr, zumindest eines Novolak-Harzes, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und
- weniger als 2,5 phr, vorzugsweise 1,2 bis 1,8 phr, zumindest eines veretherten Melaminharzes.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Mit derart geringen Mengen an dem speziellen Novolak-Harz und dem veretherten Melaminharz können Gummierungsmischungen erhalten werden, die sich nach Vulkanisation durch eine verbesserte Zugfestigkeit und Bruchdehnung auszeichnen. Dies führt zu einer verbesserten Haltbarkeit der gummierten Festigkeitsträger und damit der Gummiprodukte mit diesen gummierten Festigkeitsträgern. Außerdem kann mit derartigen Gummierungsmischungen eine kürzere Vulkanisationszeit erreicht werden.

Um besonders gute Ergebnisse hinsichtlich der Haftung und des Spannungs-Dehnungs-Verhalten zu erzielen, hat es sich als vorteilhaft erwiesen, wenn die Summe aus den Anteilen an dem Novolak-Harz und an dem veretherten Melaminharz weniger als 5 phr, vorzugsweise 2,5 bis 3,5 phr, beträgt.

Vorzugsweise ist das Verhältnis von dem Novolak-Harz zu dem veretherten Melaminharz 1:1.5 bis 1,5:1, besonders bevorzugt 1:1.

Ist die Gummierungsmischung gemäß einer vorteilhaften Weiterbildung frei von Resorcin als Haftungssubstanz, so sind die Mischungen außerdem umweltfreundlicher und weniger gesundheitsgefährdend bei der Verarbeitung.

Das Novolak-Harz ist durch Reaktion von einer Phenolverbindung mit einem Aldehyd und einem Carbamat-Harz hergestellt. Die Phenolverbindung kann dabei ausgewählt sein aus der Gruppe bestehend aus Phenol, o-, m- und p-Kresol und o-, m- und p-Monoalkylphenolen mit Alkylresten mit bis zu 18 Kohlenstoffatomen. Vorzugsweise ist die Phenolverbindung Phenol. Das Aldehyd kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Das Carbamat-Harz ist durch Reaktion von Alkylurethan mit einem Aldehyd hergestellt. Das Alkylurethan kann dabei ausgewählt sein aus der Gruppe bestehend aus Ethylurethan, Butylurethan, 2-Ethylhexylurethan und Decylurethan. Vorzugsweise ist das Alkyluethan Butylurethan.

Das Aldehyd für das Carbamat-Harz kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Bei den Aldehyden für das Novolak-Harz und das Carbamat-Harz kann es sich um gleiche oder unterschiedliche Aldehyde handeln.

Für die Gummierungsmischung wird bevorzugt ein Novolak-Harz eingesetzt, welches aus Phenol, Formaldehyd und einen Carbamat-Harz aus Butylurethan und Formaldehyd hergestellt ist (butylcarbamat-funktionalisiertes Phenol-Formaldehyharz).

Die Gummierungsmischung enthält zumindest ein verethertes Melaminharz, welches ein sekundäres Netzwerk für gute Haftung und Härte aufbaut.

Vorzugsweise ist das veretherte Melaminharz Hexamethoxymethylmelamin (HMMM). Dies ist ein übliches, auf dem Markt erhältliches Melaminharz, das ein gutes Harznetzwerk ausbilden. HMMM wird beispielsweise als technisches Produkt - oft auf einem inerten Träger - mit einem Methylierungsgrad < 6 eingesetzt.

Die erfindungsgemäße Gummierungsmischung enthält zumindest ein organisches Cobaltsalz. Dabei kann es sich beispielsweise um Cobaltstearat, -borat, -boratalkanoate, -naphthenat, -rhodinat, -octoat, -adipat usw. handeln. Es können auch mehrere Cobaltsalze im Gemisch eingesetzt werden.

Vorzugsweise enthält die Gummierungsmischung 0,2 bis 2 phr des organischen Cobaltsalzes.

Die schwefelvernetzbare Kautschukmischung enthält weitere in der Kautschukindustrie übliche Bestandteile, insbesondere zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Enthält die Kautschukmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte Styrol-Butadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Kautschukmischung kann als Verarbeitungshilfsmittel und zur Mischungsverbilligung auch Regenerat (Reclaim) zugesetzt werden.

Die Kautschukmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Kautschukmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Kautschukmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B.

Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Kautschukmischung zugesetzt. Um die Haftung insbesondere zu textilen Festigkeitsträgern zu verbessern, enthält die Gummierungsmischung vorzugsweise weniger als 5 phr Schwefel.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Benzothiazyl-2-tert.-butylsulfenamid (TBBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können. Auch weitere netzwerkbildende Systeme, wie z. B. Vulkuren^{®}, Duralink^{®}, Perkalink^{®} oder Systeme, wie sie in der WO 2010/049261 A2 beschrieben sind, können in der Gummierungsmischung eingesetzt werden.

Die Vulkanisationsbeschleuniger können in üblichen Mengen eingesetzt werden. Gemäß einer vorteilhaften Weiterbildung der Erfindung enthält die Gummierungsmischung als Vulkanisationsbeschleuniger 0,8 bis 1,5 phr Benzothiazyl-2-dicyclohexylsulfenamid (DCBS) und weniger als 0,5 phr andere Vulkanisationsbeschleuniger. Mit DCBS als Vulkanisationsbeschleuniger kann eine weitere Verbesserung hinsichtlich der Haftung erzielt werden.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann in unterschiedlichsten Gummiprodukten, in denen Festigkeitsträger vorhanden sind, eingesetzt werden. Bei diesen Gummiprodukten kann es sich z. B. um Antriebsriemen, Fördergurte, Schläuche, gummierte Gewebe oder Luftfedern handeln.

Vorzugsweise wird die Gummierungsmischung in Fahrzeugluftreifen eingesetzt. Sie kann dort z. B. als Gummierung für textile oder metallische Festigkeitsträger eingesetzt werden. Die textilen Festigkeitsträger können z. B. aus Aramid, Polyester, Polyamid, Rayon oder Hybridcorden aus diesen Materialien bestehen.

Die Gummierungsmischung kann zur Gummierung unterschiedlichster Reifenbauteile, wie dem Wulstkern, den Wulstabdeckungen, den Wulstverstärkern, dem Gürtel, der Karkasse oder den Gürtelbandagen, eingesetzt werden, aber auch für andere festigkeitsträgernahe Mischungen wie Kernreiter, Squeegee, Gürtelkantenpolster, Schulterpolster, Laufstreifenunterplatten oder andere Bodymischungen kann die Kautschukmischung verwendet werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Karkassgummierung eingesetzt, wo die gute Zugfestigkeit und die guten Haftwerte zwischen Festigkeitsträger und Gummierungsmischung zu einer hohen Lebensdauer des Fahrzeugluftreifens führen.

Alternativ oder zusätzlich kann die Gummierungsmischung auch als Gürtelgummierungsmischung eingesetzt werden, was wiederum die Lebensdauer des Fahrzeugluftreifens positiv beeinflusst.

Die Erfindung soll nun anhand der nachstehenden Tabelle näher erläutert werden.

In Tabelle 1 sind Mischungen für eine Gummierung für Stahlcord dargestellt.

Bei den Mischungen der Tabelle 1 wurde Resorcin als Haftmittel gegen ein Novolak-Harz, welches aus Phenol, Formaldehyd und einem Carbamat-Harz aus Butylurethan und Formaldehyd hergestellt ist (butylcarbamat-funktionalisiertes Phenol-Formaldehyharz), ausgetauscht und dessen Mengen sowie die des HMMM variiert. Ferner wurde in den erfindungsgemäßen Mischungen ein organisches Cobaltsalz zudosiert. Auch wurden die Vulkanisationsbeschleuniger variiert.

Die Mischungsherstellung erfolgte unter üblichen Bedingungen unter Herstellung einer Grundmischung und anschließend der Fertigmischung in einem Labortangentialmischer.

Es wurden die Umsatzzeiten von 90% Umsatz (t₉₀, Ausvulkanisationszeit) mittels rotorlosem Vulkameter (MDR = Moving Disc Rheometer) gemäß DIN 53 529 bei Vulkanisation von 160 °C bestimmt.

Aus den Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei 70 °C gemäß DIN 53 512
- Zugfestigkeit bei Raumtemperatur gemäß DIN 53 504
- Bruchdehnung bei Raumtemperatur gemäß DIN 53504

Ferner wurden mit den Mischungen aus der Tabelle 1 Versuche zur Haftung an vermessingtem Stahlcord (2x0,3 HT) gemäß ASTM 2229/D1871 ohne Alterung vorgenommen (Vulkanisation: 20 min bei 160 °C, Einbettlänge in die Gummierungsmischung: 10 mm, Auszugsgeschwindigkeit: 125 mm/min). Es wurden die Herausziehkraft und die Bedeckung bestimmt. Bei der Herausziehkraft wurden der Wert der Mischung 1 als 100 % gesetzt; die Werte der anderen Mischungen wurden auf die Mischung 1 bezogen.

**Tabelle 1**

| **Bestandteile** | **Einheit** | **1** | **2** | **3** | **4** | **5** | **6** | **7** | **8** |
|---|---|---|---|---|---|---|---|---|---|
| Naturkautschuk | phr | 100 | 100 | 100 | 100 | 100 | 100 | 100 | 100 |
| Ruß | phr | 55 | 55 | 55 | 55 | 55 | 55 | 55 | 55 |
| Kieselsäure | phr | 15 | 15 | 15 | 15 | 15 | 15 | 15 | 15 |
| Weichmacher, Alterungsschutzmittel | phr | 5 | 5 | 5 | 5 | 5 | 5 | 5 | 5 |
| Vulkanisationsaktivatoren | phr | 10 | 10 | 10 | 10 | 10 | 10 | 10 | 10 |
| Cobaltstearat | phr | - | - | 1,3 | 1,3 | 1,3 | 1,3 | 1,3 | 1,3 |
| Resorcin | phr | 3 | - | 3 | - | 3 | - | 1,5 | - |
| butylcarbamat-funktionalisiertes Phenol-Formaldehyharz^{a)} | phr | - | 3 | - | 3 | - | 3 | - | 1,5 |
| HMMM^{b)} | phr | 4,61 | 4,61 | 4,61 | 4,61 | 4,61 | 4,61 | 2,31 | 2,31 |
| Beschleuniger TBBS | phr | 0,6 | 0,6 | 0,6 | 0,6 | - | - | - | - |
| Beschleuniger DCBS | phr | 0,6 | 0,6 | 0,6 | 0,6 | 1,2 | 1,2 | 1,2 | 1,2 |
| Schwefel | phr | 6 | 6 | 6 | 6 | 6 | 6 | 6 | 6 |

| **Eigenschaften** | | | | | | | | | |
|---|---|---|---|---|---|---|---|---|---|
| t₉₀ | min | 8,2 | 13,4 | 7,3 | 10,3 | 8,1 | 11,7 | 8,5 | 9,4 |
| Härte bei RT | ShoreA | 75 | 78 | 78 | 80 | 76 | 78 | 75 | 75 |
| Rückprallelast. bei 70 °C | % | 50 | 51 | 50 | 48 | 49 | 49 | 50 | 49 |
| Zugfestigkeit bei RT | MPa | 15,8 | 17,7 | 15,9 | 18 | 16 | 17 | 17 | 19 |
| Bruchdehnung | % | 326 | 358 | 313 | 361 | 320 | 366 | 350 | 424 |
| Herausziehkraft (ungealtert) | % | 100 | 97 | 102 | 115 | 109 | 120 | 122 | 125 |
| Bedeckung (ungealtert) | % | 95 | 91 | 94 | 93 | 95 | 94 | 96 | 95 |

| | | | | | | | | | |
|---|---|---|---|---|---|---|---|---|---|
| ^{a)} Alnovol ^{®} PN 760/Past, der Firma Allnex Netherlands B. V. ^{b)} Hexamethoxymethylmelamin 65 %ig auf Kieselsäure | | | | | | | | | |

Die Mischungen 1, 2, 3, 5 und 7 sind dabei Vergleichsmischungen. Die Mischungen 4, 6 und 8 geben erfindungsgemäße Mischungen an.

Bei den erfindungsgemäßen Stahlcordgummierungen der Tabelle 1 ist eine deutliche Verbesserung der Haftung bei Verwendung von butylcarbamat-funktionalisiertem Phenol-Formaldehydharz und HMMM in Kombination mit Cobaltstearat (s. Mischung 4) zu verzeichnen. Ferner kann die Heizzeit t₉₀ reduziert werden, was zu einer Kosten- und Zeiteinsparung bei der Herstellung der Produkte führt. Setzt man gemäß Mischung 6 zwischen 0,8 bis 1,5 phr Benzothiazyl-2-dicyclohexylsulfenamid (DCBS) und weniger als 0,5 phr andere Vulkanisationsbeschleuniger ein, so kann die Haftung weiter verbessert werden.

Eine Reduzierung der Mengen an butylcarbamat-funktionalisiertem Phenol-Formaldehydharz und HMMM (s. Mischung 8) führt zu einer weiteren Verbesserung der Haftung, wobei gleichzeitig überraschenderweise das Bruchdehnungsverhalten und die Zugfestigkeit stark erhöht werden. Dies resultiert in einer verbesserten Haltbarkeit der gummierten Festigkeitsträger und der daraus hergestellten Produkte.

## Patentansprüche

1. Schwefelvernetzbare Gummierungsmischung für metallische Festigkeitsträger, enthaltend
- zumindest ein Novolak-Harz, welches Alkyurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist und
- zumindest ein verethertes Melaminharz
**dadurch gekennzeichnet, dass** sie zumindest ein organisches Cobaltsalz enthält.

2. Schwefelvernetzbare Gummierungsmischung nach Anspruch 1, **dadurch gekennzeichnet, dass** sie
- weniger als 2,5 phr (Gewichtsteile, bezogen auf 100 Gewichtsteile der gesamten Kautschuke in der Mischung) zumindest eines Novolak-Harzes, welches Alkyurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und
- weniger als 2,5 phr zumindest eines veretherten Melaminharzes enthält.

3. Schwefelvernetzbare Gummierungsmischung nach Anspruch 1 oder 2, **dadurch gekennzeichnet, dass** sie
- 1,2 bis 1,8 phr zumindest eines Novolak-Harzes, welches Alkyurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und
- 1,2 bis 1,8 phr zumindest eines veretherten Melaminharzes enthält.

4. Schwefelvernetzbare Gummierungsmischung nach zumindest einem der vorhergehenden Ansprüche, **dadurch gekennzeichnet, dass** die Summe aus den Anteilen an dem Novolak-Harz und an dem veretherten Melaminharz weniger als 5 phr, vorzugsweise 2,5 bis 3,5 phr, beträgt.

5. Schwefelvernetzbare Gummierungsmischung nach zumindest einem der vorhergehenden Ansprüche, **dadurch gekennzeichnet, dass** sie frei von Resorcin ist.

6. Schwefelvernetzbare Gummierungsmischung nach zumindest einem der vorhergehenden Ansprüche, **dadurch gekennzeichnet, dass** die Phenolverbindung Phenol ist.

7. Schwefelvernetzbare Gummierungsmischung nach zumindest einem der vorhergehenden Ansprüche, **dadurch gekennzeichnet, dass** das Alkylurethan Butylurethan ist.

8. Schwefelvernetzbare Gummierungsmischung nach zumindest einem der vorhergehenden Ansprüche, **dadurch gekennzeichnet, dass** das Aldehyd Formaldehyd ist.

9. Schwefelvernetzbare Gummierungsmischung nach zumindest einem der vorhergehenden Ansprüche, **dadurch gekennzeichnet, dass** das veretherte Melaminharz Hexamethoxymethylmelamin (HMMM) ist.

10. Schwefelvernetzbare Gummierungsmischung nach zumindest einem der vorhergehenden Ansprüche, **dadurch gekennzeichnet, dass** sie 0,2 bis 2 phr des zumindest einen organischen Cobaltsalzes enthält.

11. Schwefelvernetzbare Gummierungsmischung nach zumindest einem der vorhergehenden Ansprüche, **dadurch gekennzeichnet, dass** sie als Vulkanisationsbeschleuniger 0,8 bis 1,5 phr Benzothiazyl-2-dicyclohexylsulfenamid (DCBS) und weniger als 0,5 phr andere Vulkanisationsbeschleuniger enthält.

12. Fahrzeugluftreifen, der eine mit Schwefel vernetzte Gummierungsmischung gemäß Anspruch 1 aufweist.

13. Fahrzeugluftreifen nach Anspruch 12, **dadurch gekennzeichnet, dass** er eine Karkassgummierung aus der Gummierungsmischung aufweist.

14. Fahrzeugluftreifen nach Anspruch 12 oder 13, **dadurch gekennzeichnet, dass** er eine Gürtelgummierung aus der Gummierungsmischung aufweist.

## Claims

1. Sulfur-crosslinkable rubberization mixture for metallic strength members containing
- at least one novolac resin comprising alkyl urethane units and produced by reaction of a phenolic compound, an aldehyde and a carbamate resin, wherein the carbamate resin is produced by reaction of alkyl urethane with an aldehyde, and
- at least one etherified melamine resin,
**characterized in that** said mixture contains at least one organic cobalt salt.

2. Sulfur-crosslinkable rubberization mixture according to Claim 1, **characterized in that** it contains
- less than 2.5 phr (parts by weight, based on 100 parts by weight of the total rubbers in the mixture) of at least one novolac resin comprising alkyl urethane units and produced by reaction of a phenolic compound, an aldehyde and a carbamate resin, wherein the carbamate resin is produced by reaction of alkyl urethane with an aldehyde, and
- less than 2.5 phr of at least one etherified melamine resin.

3. Sulfur-crosslinkable rubberization mixture according to Claim 1 or 2, **characterized in that** it contains
- 1.2 to 1.8 phr of at least one novolac resin comprising alkyl urethane units and produced by reaction of a phenol compound, an aldehyde and a carbamate resin, wherein the carbamate resin is produced by reaction of alkyl urethane with an aldehyde, and
- 1.2 to 1.8 phr of at least one etherified melamine resin.

4. Sulfur-crosslinkable rubberization mixture according to at least one of the preceding claims, **characterized in that** the proportions of the novolac resin and of the etherified melamine resin sum to less than 5 phr, preferably 2.5 to 3.5 phr.

5. Sulfur-crosslinkable rubberization mixture according to at least one of the preceding claims, **characterized in that** it is free from resorcinol.

6. Sulfur-crosslinkable rubberization mixture according to at least one of the preceding claims, **characterized in that** the phenolic compound is phenol.

7. Sulfur-crosslinkable rubberization mixture according to at least one of the preceding claims, **characterized in that** the alkylurethane is butylurethane.

8. Sulfur-crosslinkable rubberization mixture according to at least one of the preceding claims, **characterized in that** the aldehyde is formaldehyde.

9. Sulfur-crosslinkable rubberization mixture according to at least one of the preceding claims, **characterized in that** the etherified melamine resin is hexamethoxymethylmelamine (HMMM).

10. Sulfur-crosslinkable rubberization mixture according to at least one of the preceding claims, **characterized in that** it contains 0.2 to 2 phr of the at least one organic cobalt salt.

11. Sulfur-crosslinkable rubberization mixture according to at least one of the preceding claims, **characterized in that** it contains as vulcanization accelerator 0.8 to 1.5 phr of benzothiazyl-2-dicyclohexylsulfenamide (DCBS) and less than 0.5 phr of other vulcanization accelerators.

12. Pneumatic vehicle tire comprising a sulfur-crosslinked rubberization mixture according to Claim 1.

13. Pneumatic vehicle tire according to Claim 12, **characterized in that** it comprises a carcass rubberization composed of the rubberization mixture.

14. Pneumatic vehicle tire according to Claim 12 or 13, **characterized in that** it comprises a belt rubberization composed of the rubberization mixture.

## Revendications

1. Mélange de gommage réticulable au soufre pour supports de résistance métalliques, contenant
- au moins une résine novolaque, qui présente des unités alkyuréthane et qui est préparée par réaction d'un composé phénolique, d'un aldéhyde et d'une résine carbamate, la résine carbamate étant préparée par réaction d'alkyluréthane avec un aldéhyde, et
- au moins une résine mélamine éthérifiée
**caractérisé en ce qu'**il contient au moins un sel de cobalt organique.

2. Mélange de gommage réticulable au soufre selon la revendication 1, **caractérisé en ce qu'**il contient
- moins de 2,5 pce (parties en poids pour 100 parties en poids du total des caoutchoucs dans le mélange) d'au moins une résine novolaque qui présente des unités alkyuréthane et qui est préparée par réaction d'un composé phénolique, d'un aldéhyde et d'une résine carbamate, la résine carbamate étant préparée par réaction d'alkyluréthane avec un aldéhyde, et
- moins de 2,5 pce d'au moins une résine de mélamine éthérifiée.

3. Mélange de gommage réticulable au soufre selon la revendication 1 ou 2, **caractérisé en ce qu'**il contient
- 1,2 à 1,8 pce d'au moins une résine novolaque, qui présente des unités alkyuréthane et qui est préparée par réaction d'un composé phénolique, d'un aldéhyde et d'une résine carbamate, la résine carbamate étant préparée par réaction d'alkyluréthane avec un aldéhyde, et
- 1,2 à 1,8 pce d'au moins une résine mélamine éthérifiée.

4. Mélange de gommage réticulable au soufre selon au moins l'une quelconque des revendications précédentes, **caractérisé en ce que** la somme des proportions de la résine novolaque et de la résine mélamine éthérifiée est inférieure à 5 pce, de préférence de 2,5 à 3,5 pce.

5. Mélange de gommage réticulable au soufre selon au moins l'une quelconque des revendications précédentes, **caractérisé en ce qu'**il est exempt de résorcinol.

6. Mélange de gommage réticulable au soufre selon au moins l'une quelconque des revendications précédentes, **caractérisé en ce que** le composé phénolique est le phénol.

7. Mélange de gommage réticulable au soufre selon au moins l'une quelconque des revendications précédentes, **caractérisé en ce que** l'alkyluréthane est le butyluréthane.

8. Mélange de gommage réticulable au soufre selon au moins l'une quelconque des revendications précédentes, **caractérisé en ce que** l'aldéhyde est le formaldéhyde.

9. Mélange de gommage réticulable au soufre selon au moins l'une quelconque des revendications précédentes, **caractérisé en ce que** la résine mélamine éthérifiée est l'hexaméthoxyméthylmélamine (HMMM).

10. Mélange de gommage réticulable au soufre selon au moins l'une quelconque des revendications précédentes, **caractérisé en ce qu'**il contient de 0,2 à 2 pce de l'au moins un sel de cobalt organique.

11. Mélange de gommage réticulable au soufre selon au moins l'une quelconque des revendications précédentes, **caractérisé en ce qu'**il contient comme accélérateur de vulcanisation 0,8 à 1,5 pce de benzothiazyl-2-dicyclohexyl-sulfénamide (DCBS) et moins de 0,5 pce d'autres accélérateurs de vulcanisation.

12. Pneumatique de véhicule, présentant un mélange de gommage réticulé au soufre selon la revendication 1.

13. Pneumatique de véhicule selon la revendication 12, **caractérisé en ce qu'**il présente un gommage de carcasse en le mélange de gommage.

14. Pneumatique de véhicule selon la revendication 12 ou 13, **caractérisé en ce qu'**il présente un gommage de ceinture en le mélange de gommage.
